# EUROPÄISCHE PATENTANMELDUNG

(11) **EP 4 099 523 A1**
(43) Veröffentlichungstag der Anmeldung: **07.12.2022**
(21) Anmeldenummer: 21176945.0
(22) Anmeldetag: 31.05.2021
(51) Int. Cl.: H02G 1/00, H02G 1/12

(54) **KABELBEARBEITUNGSVORRICHTUNG MIT ROTIERENDEN WERKZEUGEN**

(71) Anmelder: Schleuniger AG, 3608 Thun (CH)
(72) Erfinder: FISCHER, Wolfgang, 6300 Zug (CH); APPENZELLER, Reto, 3603 Thun (CH); RYCHENER, Jörg, 3612 Steffisburg (CH)
(74) Vertreter: Patentbüro Paul Rosenich AG

(57) **Zusammenfassung**

Die Erfindung betrifft eine Kabelbearbeitungsvorrichtung (20) umfassend einen Werkzeughalter (30) zum Aufnehmen einer Gruppe aus zumindest zwei ersten Werkzeugen (351, 352) zur Bearbeitung eines Kabels (80), wobei der Werkzeughalter (30) um eine Drehachse (X) drehbar gelagert ist und die zumindest zwei ersten Werkzeuge (351, 352) relativ zum Werkzeughalter (30) zum Zustellen der ersten Werkzeuge (351, 352) für die Kabelbearbeitung bewegbar sind, und eine erste Antriebseinrichtung (34) zum rotativen Antreiben des Werkzeughalters (30) und eine zweite Antriebseinrichtung (44) zur Bewegung der ersten Werkzeuge (351, 352) relativ zum Werkzeughalter (30) vorgesehen sind, und zumindest ein weiteres Werkzeug (361, 362) im Werkzeughalter (30) angeordnet ist und relativ zu diesem bewegbar ist. Das zumindest eine zweite Werkzeug (361, 362) ist unabhängig von den ersten Werkzeugen (351, 352) mithilfe einer weiteren Antriebseinrichtung (61) bewegbar. Des Weiteren betrifft die Erfindung ein Verfahren zum Konfektionieren eines Kabels (80) mit einer Kabelbearbeitungsvorrichtung.

## Beschreibung

Die Erfindung betrifft eine Kabelbearbeitungsvorrichtung mit rotierenden Werkzeugen nach dem Anspruch 1 und ein Verfahren zum Konfektionieren eines Kabels nach dem Anspruch 13.

Rotativ bewegbare Kabelbearbeitungsvorrichtungen, welche vorwiegend zum Bearbeiten bzw. Abisolieren von mehrschichtigen Kabeln, wie Koaxialkabeln oder Doppelmantelkabeln, aber auch von anderen Kabeln und Drähten geeignet sind, sind bekannt. Typischerweise wird das Abisolieren stufenweise durchgeführt. Meistens durchtrennt ein erster rotativer Einschnitt mit einem Abisoliermesser die äussere Ummantelung und/oder die Schirmung, worauf die eingeschnittenen Schichten sogleich abgezogen werden können. Dabei oder danach wird oft auch eine Folie oder Innenisolation wie z.B. ein Dielektrikum bei Koaxialkabeln bis zum Innenleiter eingeschnitten und kann danach teilweise oder ganz abgezogen werden. Daraufhin wird das ganze Kabel durchgeschnitten.

DE 10 2020 207 962 A1 offenbart eine Kabelbearbeitungsvorrichtung mit zwei Werkzeuggruppen in einem rotativ bewegbaren Abisolierkopf, welche über eine gemeinsame Antriebseinrichtung bewegt werden. Die erste Werkzeuggruppe umfasst Einschneide-Messer zum Einschneiden eines Kabels und die zweite Werkzeuggruppe Durchschneidemesser zum Durchschneiden eines Kabels. Die Werkzeuge werden mithilfe von Kulissenführungen bewegt.

Nachteilig an dieser bekannten Lösung ist, dass sich somit beide Werkzeuggruppen immer, entsprechend der Kulissenausgestaltung gleich schnell bewegen. Dies führt bei manchen Kabeltypen zu einer reduzierten Schnittqualität.

Die WO 2020/119916 A1 offenbart eine Kabelbearbeitungsvorrichtung mit einer Werkzeuggruppe, wobei die Antriebskinematik für die Zustellbewegung dieser Werkzeuge besonders einfach ausgeführt ist.

Es ist die Aufgabe der vorliegenden Erfindung, einen oder mehrere Nachteile des Standes der Technik zu beheben. Insbesondere ist die Aufgabe, eine verbesserte Kabelbearbeitungsvorrichtung zu schaffen, bei der die Präzision mit dem ersten Werkzeug weiterhin sichergestellt ist und die Bearbeitungsgeschwindigkeit mit dem zweiten Werkzeug erhöht ist.

Zumindest einzelne der vorgenannten Aufgaben werden durch die Merkmale der unabhängigen Patentansprüche gelöst. Vorteilhafte Weiterbildungen sind in den Figuren und in den abhängigen Patentansprüchen dargelegt.

Eine erfindungsgemässe Kabelbearbeitungsvorrichtung umfasst einen Werkzeughalter zum Aufnehmen einer Gruppe aus zumindest zwei ersten Werkzeugen zur Bearbeitung eines Kabels, wobei der Werkzeughalter um eine Drehachse drehbar gelagert ist und die zumindest zwei ersten Werkzeuge relativ zum Werkzeughalter zum Zustellen der ersten Werkzeuge für die Kabelbearbeitung bewegbar sind. Es sind eine erste Antriebseinrichtung zum rotativen Antreiben des Werkzeughalters und eine zweite Antriebseinrichtung zur Bewegung der ersten Werkzeuge relativ zum Werkzeughalter vorgesehen, und es ist zumindest ein zweites Werkzeug im Werkzeughalter angeordnet und relativ zu diesem bewegbar. Das zumindest eine zweite Werkzeug ist unabhängig von den ersten Werkzeugen mithilfe einer weiteren Antriebseinrichtung bewegbar.

Die Kabelbearbeitungsvorrichtung kann eine eigenständige Maschine oder ein Teil bzw. eine Station einer Gesamtmaschine sein, sodass die Kabelbearbeitungsvorrichtung kostengünstig herstellbar ist und vielseitig einsetzbar ist. Die Bewegung der beiden ersten Werkzeuge kann eine lineare Bewegung sein oder eine rotierende Bewegung sein oder eine Kombination aus einer linearen und einer rotierenden Bewegung sein. Die vorliegende Kabelbearbeitungsvorrichtung ermöglicht eine verbesserte Bearbeitung des zu bearbeitenden Kabels, wobei insbesondere die Bearbeitungsqualität erhöht wird, da mithilfe der beiden ersten Werkzeuge das Kabelende des Kabels präzise ausgestaltet wird. Beispielsweise ist das zumindest eine zweite Werkzeug ein Durchschneidemesser zum Durchschneiden des Kabels, ein stumpfes Pizzamesser zum Aufstellen eines Schirmgeflechts, ein Messer mit speziellen Schneiden zum Entfernen eines Folienrests, oder ein beheiztes Werkzeug zum Anschmelzen einer Kabelummantelung oder einer Folie. Die beiden Werkzeuggruppen ermöglichen zumindest zwei unterschiedliche und unabhängige Bearbeitungsschritte am Kabelende des Kabels. Die unterschiedlichen Antriebseinrichtungen ermöglichen ein einfaches und präzises Antreiben des Werkzeughalters und ein einfaches und präzises Zustellen der Werkzeuge beim Bearbeiten des Kabelendes des Kabels. Dabei ist das Zustellen der ersten Werkzeuge im Messerhalter unabhängig vom Zustellen des zumindest einen zweiten Werkzeugs, sodass die Präzision mit dem ersten Werkzeug weiterhin sichergestellt ist und die Bearbeitungsgeschwindigkeit mit dem zweiten Werkzeug erhöht ist.

Die beiden Werkzeuggruppen können im Werkzeughalter derart angeordnet sein, dass der Werkzeughalter die Bearbeitungskräfte beim Bearbeiten des Kabels aufnimmt. Die Bearbeitungskräfte können Axialkräfte und/oder Radialkräfte umfassen. Der Werkzeughalter ist mithilfe der ersten Antriebseinrichtung an einer, je nach Kabeltyp oder Bearbeitungsprozess notwendigen, vordefinierten Position, relativ zur Drehachse, positionierbar.

Vorzugsweise ist zumindest eines der Werkzeuge als Messer zum Einschneiden des Kabels ausgeführt. Beispielsweise schneidet das Messer in eine Kabelummantelung ein, um die Ummantelung danach einfach abzuziehen.

Bevorzugt sind die ersten Werkzeuge als Einschneide-Messer zum Einschneiden in eine Ummantelung des Kabels ausgeführt. Die Ummantelung eines Kabels weist je nach Kabeltyp (Leiterquerschnitt, Ummantelungsmaterial, usw.) unterschiedliche Eigenschaften auf, so dass je nach Ausführung des zu bearbeiteten Kabeltyps vorteilhaft ein eigenes Einschneide-Messer zu montieren ist. Eine separate Antriebseinrichtung für das Messer zum Einschneiden erhöht die Präzision beim Einschneiden. Die vorliegende Kabelbearbeitungsvorrichtung ermöglicht eine verbesserte Bearbeitung des zu bearbeitenden Kabels beim Einschneiden in das Kabel, wobei insbesondere die Einschneidequalität erhöht wird, da mithilfe der optimiert dimensionierten Antriebseinrichtungen die Einschneidetiefe in die Ummantelung präzise reproduzierbar ist.

Alternativ oder ergänzend sind die ersten Werkzeuge als Einschneide-Messer zum Einschneiden in eine Folie des Kabels ausgeführt. Die Folien der Kabel sind hauchdünn, sodass das Einschneide-Messer geeignete hochpräzise Klingen aufweist, um lediglich die hauchdünne Folie zu schneiden. Eine eigene präzise Antriebseinrichtung für die beiden Einschneide-Messer ermöglicht eine verbesserte, präzise Schnittqualität in die hauchdünnen Folien. Ein ungewolltes Einschneiden in eine unter der Folie angeordneten Schicht wird verhindert.

Alternativ oder ergänzend sind die ersten Werkzeuge als Einschneide-Messer zum Einschneiden in eine Schirmung des Kabels ausgeführt. Die Schirmung der Kabel ist typischerweise aus elektrisch leitenden Materialien, wie beispielsweise aus Aluminium, gefertigt, sodass das Einschneide-Messer geeignete robuste Schneiden aufweist, um den Verschleiss zu minimieren. Um den Verschleiss der Einschneide-Messer weiter zu minimieren und einen Messertausch zeitlich zu verzögern, ist ein präzises Antreiben mit einer eigenen Antriebseinrichtung vorteilhaft.

Alternativ oder ergänzend ist zumindest eines der Werkzeuge als Messer zum Durchschneiden des Kabels ausgeführt. Beispielsweise schneidet das Messer das Kabel durch. Eine separate Antriebseinrichtung für das Messer zum Durchschneiden erhöht die Bearbeitungsgeschwindigkeit beim Durchschneiden. Die vorliegende Kabelbearbeitungsvorrichtung ermöglicht eine verbesserte Bearbeitung des zu bearbeitenden Kabels, wobei insbesondere die Schnittqualität erhöht wird, und die Durch-Schnittkante am Kabelende des Kabels präzise ausgestaltet ist. Die beiden Werkzeuggruppen ermöglichen zumindest zwei unterschiedliche und gleichzeitig unabhängige Schneideschritte am Kabelende des Kabels. Die unterschiedlichen Antriebseinrichtungen ermöglichen ein einfaches und präzises Antreiben des Werkzeughalters und ein einfaches, unabhängiges und schnelles Zustellen der Schneidwerkzeuge beim Einschneiden und/oder Durchschneiden des Kabelendes des Kabels.

Bevorzugterweise ist das zumindest eine zweite Werkzeug als Durchschneide-Messer zum Durchschneiden des Kabels ausgeführt. Die vorliegende Kabelbearbeitungsvorrichtung ermöglicht eine verbesserte Bearbeitung des zu bearbeitenden Kabels, wobei insbesondere die Schnittqualität erhöht wird, da die Durch-Schnittkante am Kabelende des Kabels präzise ausgestaltet ist. Für eine optimale Schnittqualität und eine hohe Bearbeitungsgeschwindigkeit ist es vorteilhaft, wenn sich die eine Werkzeuggruppe besonders langsam und präzise und die andere Werkzeuggruppe besonders schnell bewegen kann. So sollten sich beispielsweise die Durchschneide-Messer viel schneller in Zustell-Richtung bewegen als die Einschneide-Messer.

Alternativ weist das zumindest eine zweite Werkzeug eine scheibenförmige Klinge auf, welche über eine weitere Drehachse, bevorzugt parallel zur Haupt-Drehachse drehbar gelagert ist, auch "stumpfes Pizzamesser" genannt. Mithilfe eines derartigen Werkezugs wird ein Schirmgeflecht nicht geschnitten, sondern besonders gleichmässig plastisch verformt, so dass es für weitere Bearbeitungsschritte gleichmässig (vor-)aufgestellt wird (wie beschrieben in DE 102020207937 A1).

Alternativ ist das zumindest eine zweite Werkzeug ein beheizbares Werkzeug, sodass eine Folie oder eine Ummantelung des Kabels thermisch bearbeitbar ist, insbesondere wegschmelzbar ist.

Alternativ ist das zumindest eine zweite Werkzeug ein Axialmesser zum einfachen Wegschneiden eines Folienrests, bspw. bei einem Hochvoltkabel.

Die separate Antriebseinrichtung für die zuvor angeführten zweiten Werkzeuge ermöglicht ein schnelles Bearbeiten des Kabels bzw. des Kabelendes, sodass die Produktivität im Kabelbearbeitungsprozess erhöht wird und der Ausschuss minimiert ist.

Bevorzugt sind die Schneiden des Durchschneide-Messers V-förmig ausgestaltet. Dabei sind die Klingen bzw. die Bearbeitungsflächen des Durchschneide-Messers V-förmig zueinander ausgerichtet, sodass sich die beiden Klingen gegenüberstehen. V-förmigen Klingen bzw. Bearbeitungsflächen ermöglichen ein Durchschneiden des Kabels mit einer weitgehend planaren Sch n ittfläche.

Vorzugsweise sind die Bearbeitungsflächen der ersten Werkzeuge und die Bearbeitungsflächen des zumindest einen zweiten Werkzeugs in derselben Ebene angeordnet. Durch die Anordnung in derselben Ebene können beide Schnitte kurz hintereinander erfolgen, ohne dass hierzu eine grosse Bewegung des Kabels relativ zum Werkzeughalter notwendig wäre. Somit wird Bearbeitungszeit gespart und die Präzision verbessert.

Bevorzugterweise ist ein weiteres zweites Werkzeug vorhanden, dessen Bearbeitungsfläche in derselben Ebene wie die Bearbeitungsfläche des zweiten Werkzeugs angeordnet ist. Dabei ist das Kabel mithilfe des zumindest einen zweiten Werkzeugs sowie mit dem weiteren zweiten Werkzeug symmetrisch bearbeitbar, wodurch eine unerwünschte Verformung des Kabels aufgrund eines asymmetrischen Krafteintrags verhindert wird. So wird die hohe Bearbeitungspräzision sichergestellt. Die beiden zweiten Werkzeuge sind unabhängig von den ersten Werkzeugen mithilfe der weiteren Antriebseinrichtung bewegbar, sodass die Bearbeitungsgeschwindigkeit und die Präzision weiter verbessert sind.

Vorzugsweise ist im Werkzeughalter zumindest ein passives Kraftelement vorhanden, um zumindest eines der zweiten Werkzeuge in eine erste Position zu überführen. Als erste Position ist hier vorliegend die offene Position definiert, also jene Position, in der das zumindest eine zweite Werkzeug maximal entfernt von der Drehachse im Werkzeughalter angeordnet ist. Dabei ist dieses zweite Werkzeug stabil und reproduzierbar in der ersten Position gehalten, wenn die beiden ersten Werkzeuge das Kabel bearbeiten. Ergänzend dazu können beide zweiten Werkzeuge von jeweils einem passiven Kraftelement in deren ersten Positionen überführbar sein, und sind in deren ersten Positionen stabil gehalten. Beispielsweise sind die passiven Kraftelemente eine Feder, wie eine Druckfeder, oder ein Magnet.

Bevorzugterweise umfasst die weitere Antriebseinrichtung zur Bewegung des zweiten Werkzeugs zumindest einen Betätigerstössel zur Betätigung von zumindest einer dazu ausgebildeten Kontaktfläche auf dem zweiten Werkzeug. Dafür weist dieses zweite Werkzeug eine Kontaktfläche auf, welche gegenüberliegend der Bearbeitungsfläche am zweiten Werkzeug angeordnet ist, wobei die Kontaktfläche insbesondere an der Stirnfläche dieses zweiten Werkzeugs angeordnet ist. Damit sind die zweiten Werkzeuge schnell und reproduzierbar von der ersten Position (offen) in zumindest eine zweite Position bewegbar. Als zweite Position (geschlossen) ist eine Position des zumindest einen zweiten Werkzeugs, bzw. der beiden zweiten Werkzeuge definiert, in welcher die beiden zweiten Werkzeuge, je nach Bearbeitungsschritt, das Kabel berühren, oder in die Ummantelung, die Schirmung, die Folie oder in den Leiter eindringen bzw. das Kabel durchschneiden. Zwischen der ersten Position und der zweiten Position der zweiten Werkzeuge gibt es unzählige dritte Positionen, in denen, je nach Verwendung, die zweiten Werkzeuge mithilfe der weiteren Antriebseinrichtung positionierbar sind.

Insbesondere ist der Betätigerstössel ortsfest an der Kabelbearbeitungsvorrichtung angeordnet, sodass der Betätigerstössel für das zumindest eine zweite Werkzeug nicht mit dem zumindest einen zweiten Werkzeug mitdreht. Dadurch kann der Betätigerstössel mit einer einfachen Energieversorgung ohne Drehdurchführung angetrieben werden. Insbesondere ist der Betätigerstössel benachbart zum Werkzeughalter und separiert vom Werkzeughalter angeordnet. Dadurch ist das Gesamtgewicht des Werkzeughalters reduziert, sodass die Schwungmasse beim Drehen des Werkzeughalters reduziert ist. Dadurch ist der Werkzeughalter mit der ersten Antriebseinrichtung präziser positionierbar, sodass das Bearbeiten des Kabels mit den ersten Werkzeugen weiter präzisiert ist. Auch sinkt durch die geringere Schwungmasse der Energieverbrauch der Antriebsvorrichtung.

Alternativ oder ergänzend ist die weitere Antriebseinrichtung als Parallelgreifer ausgebildet, sodass die beiden zweiten Werkzeuge synchron und schnell von der ersten Position in deren zweite Position überführbar sind.

Bevorzugt ist die weitere Antriebseinrichtung als pneumatischer Parallelgreifer ausgebildet, sodass das zumindest eine zweite Werkzeug reproduzierbar und schnell von der ersten Position in die zweite Position überführbar ist.

Vorteilhaft sind die beiden ersten Werkzeuge mithilfe der weiteren Antriebseinrichtung von einer ersten Position (offen) in eine zweite Position (geschlossen) bewegbar. Als erste Position ist hier vorliegend die offene Position definiert, also jene Position, in der die ersten Werkzeuge maximal entfernt von der Drehachse im Werkzeughalter angeordnet sind. Als zweite Position (geschlossen) ist eine Position der ersten Werkzeuge definiert, in welcher die beiden ersten Werkzeuge, je nach Bearbeitungsschritt, das Kabel berühren, oder in die Ummantelung, die Schirmung, die Folie oder in den Leiter eindringen. Zwischen der ersten Position und der zweiten Position der ersten Werkzeuge gibt es unzählige dritte Positionen, in denen, je nach Verwendung, die ersten Werkzeuge mithilfe der zweiten Antriebseinrichtung positionierbar sind.

Vorzugsweise ist die weitere Antriebseinrichtung im Werkzeughalter angeordnet, sodass eine kompakte Bauweise vorhanden ist, und die Bearbeitungswege von der ersten Position des zumindest einen zweiten Werkzeugs in die zweite Position verkürzt sind und dadurch die Bearbeitungsgeschwindigkeit erhöht ist.

Bevorzugt ist eine Energieversorgung vorhanden, welche über Schläuche mit der Antriebseinrichtung verbunden ist. Die Energieversorgung kann eine elektrische Energieversorgung, eine hydraulische und/oder eine pneumatische Energieversorgung sein, welche die weitere Antriebseinrichtung mit elektrischem Strom oder mit einem Fluid (Druckluft oder Öl) versorgt.

Bevorzugt ist eine Drehdurchführung für die Schläuche vorhanden. Alternativ oder ergänzend sind mitdrehende Sensoren in dem Werkzeughalter und/oder in den Antriebseinrichtungen vorhanden, beispielsweise zur Überwachung der ersten und/oder zweiten Positionen der jeweiligen Werkzeuge. Die Drehdurchführung kann eine einfache Drehdurchführung, oder HohlwellenDrehdurchführung, oder Mehrkanal-Drehdurchführung mit zumindest einem Schleifring sein, insbesondere wenn doppeltwirkende pneumatischer Parallelgreifer vorhanden sind und/oder mitdrehende Sensoren vorhanden sind. Somit werden die Schläuche und/oder Elektrokabel durch die Rotation des Werkzeughalters nicht ungewollt aufgewickelt.

Bevorzugterweise ist die weitere Antriebseinrichtung im Werkzeughalter pneumatisch ausgeführt, sodass eine kostengünstige und leicht bauende weitere Antriebseinrichtung vorhanden ist, und das Gesamtgewicht des Werkzeughalters klein ist, um die Präzision beim Rotieren des Werkzeughalters zu verbessern.

Bevorzugt ist die weitere Antriebseinrichtung als einfachwirkender Pneumatikzylinder ausgeführt. Durch die Verwendung von einfachwirkenden Pneumatikzylinder in Kombination mit passiven Kraftelementen wird nur ein einziger Druckluftkanal in der Drehdurchführung benötigt, was eine besonders kostengünstige und kompakte Ausführung ermöglicht.

Vorzugsweise ist ein Stellring vorhanden, welcher relativ zum Werkzeughalter bewegbar ist. Bevorzugt ist diese Bewegung eine Drehung um die Drehachse, sodass eine platzsparende Bewegung des Stellrings um die Drehachse möglich ist und kompakt gebaut wird.

Alternativ dazu ist diese Bewegung eine lineare Verschiebung parallel zur Drehachse. Diese Bauform benötigt etwas mehr Platz als die Bauform mit Drehung des Stellrings, dafür ist allerdings nur ein Zahnriemen notwendig. Auch sind die beiden Antriebe für die Rotation und die Zustellbewegung der ersten Werkzeuge unabhängig voneinander, weshalb eine aufwändige elektrische Synchronisation (wie bei DE 10 2020 207 962 A1) oder eine aufwändige Mechanik (wie bei WO 2020/119916 A1) nicht notwendig ist.

Bevorzugt ist zumindest ein Antriebselement vorhanden, welches am Stellring angeordnet ist oder mit einer Fläche des Stellrings in Wirkverbindung steht, um die Drehbewegung des Stellrings relativ zum Werkzeughalter einfach und präzise in eine Linearbewegung eines der beiden ersten Werkzeuge umzuwandeln. Beispielsweise umfasst das zumindest eine Antriebselement eine Pleuelstange, welche im Stellring und in einem der ersten Werkzeuge drehbar gelagert ist. In dieser Ausführung werden alle Kräfte sehr direkt übertragen, wodurch das Umkehrspiel sehr gering. Somit wird eine maximale Präzision erreicht.

Alternativ kann das Antriebselement ein flexibles Element sein, beispielsweise ein Seil, ein Band, ein Riemen oder eine Kette und ist am zumindest einen ersten Werkzeug und am als Scheibe ausgestalteten Stellring befestigt; oder tritt mithilfe einer Verzahnung in formschlüssige Wirkverbindung mit diesen anderen Elementen des Antriebs. Im Werkzeughalter sind Umlenkungen vorgesehen, um das Antriebselement so zu führen, dass die gewünschte Umsetzung der Bewegung erzielt wird. Diese Umlenkungen sind bevorzugt als Rollen ausgeführt, um die Reibungsverluste zu minimieren. Durch den Antrieb mithilfe flexibler Antriebselemente und Umlenker wird, im Gegensatz zur Variante mit Pleuelstange, ein konstantes Übersetzungsverhältnis erzielt, wie auch bei den später beschriebenen Varianten mit Zahnrädern oder Kulissenführungen. Verglichen mit diesen Alternativen weist dieser Antrieb ein geringeres Umkehrspiel auf, was die Präzision verbessert. Weiters können die ersten Werkzeuge in eine Richtung gefedert gelagert sein im Werkzeughalter. Dadurch muss das Antriebselement nur Zugkräfte in eine Richtung aufbringen und kann deshalb kürzer und einfacher ausgeführt sein, mit weniger Umlenkern. Auch können die Umlenker so angeordnet sein, dass mit nur einem Riemen alle Werkzeuge bewegt werden.

Alternativ kann das Antriebselement auch ein Zahnrad sein, mit einer Verzahnung passend zu einer Verzahnung im zumindest einen ersten Werkzeug und im ebenfalls als Zahnrad ausgestalteten Stellring (Aussen- oder Innenfläche). Der Wirkungsort der Wirkverbindung zwischen Antriebselement und Werkzeug ist hier der Ort, wo sich die gerade im Eingriff befindlichen Zähne des Zahnrads bzw. Ritzels und der Verzahnung bzw. Zahnstange auf dem Werkzeug berühren. Im Gegensatz zu den anderen Ausführungsformen, wo der Wirkungsort durch ein Drehgelenk und/oder die Befestigungsmittel für einen Riemen definiert ist, wandert hier der Wirkungsort entlang des Werkzeuges beim Abrollen des Zahnrades auf der Zahnstange im lokalen Koordinatensystem des Werkzeuges, bleibt aber im lokalen Koordinatensystem des Werkzeughalters ungefähr am selben Ort. Ähnliches gilt für den Wirkungsort der Wirkverbindung zwischen Antriebselement und Stellring. Der Antrieb mit Zahnrädern benötigt sehr wenig Teile und ist deshalb sehr platzsparend. Auch hier ist das Übersetzungsverhältnis konstant.

Alternativ kann das Antriebselement auch ein Gleitkörper oder ein Gleitlager sein, passend zu einem als Nockenwelle oder Kulissenführung ausgestalteten Stellring. Diese Bauform lässt sich sehr kompakt realisieren.

In den zuvor genannten Ausführungsformen bewirkt die Bewegung des Stellrings mithilfe des Antriebselements eine lineare Bewegung des zumindest einen ersten Werkzeugs. Somit können die ersten Werkzeuge einfach und präzise von einer ersten Position in zumindest eine zweite Position bewegt werden mithilfe einer Bewegung des Stellrings.

Bevorzugterweise ist das Kabel relativ zum Werkzeughalter axial entlang der Drehachse bewegbar. Damit ist das Kabel zentriert zum Werkzeughalter zuführbar, sodass ein rotationssymmetrisches Bearbeiten des Kabels ermöglicht wird. Die axiale Bewegung des Kabels kann auch mit zugestellten Werkzeugen erfolgen, wodurch ein Abziehen von teil-eingeschnittenen äusseren Schichten ermöglicht wird.

Insbesondere erfolgt das Bewegung des Kabels entlang der Drehachse mithilfe eines Greifers mit zwei Greiferbacken, welcher mithilfe eines Spindelantriebs bewegt wird. Der Greifer ist bevorzugt als pneumatischer Parallelgreifer ausgeführt.

Alternativ kann auch der Greifer für das Kabel ortsfest bleiben und die rotierenden Elemente der Kabelbearbeitungsvorrichtung axial entlang der Drehachse bewegt werden, bevorzugt wiederum mit einem Spindelantrieb. Alternativ zum Spindelantrieb kann auch ein anderer Linearantrieb verwendet werden, beispielsweise mit Zahnriemen oder Zahnstange.

Anstelle eines Greifers kann das Kabel auch in einer Fördervorrichtung mit angetriebenen Rollen fixiert und gleichzeitig bewegt werden. In diesem Fall bewegt sich nur das Kabel durch motorisierte Drehung der angetriebenen Rollen.

Vorzugsweise ist eine Gruppe von dritten Werkzeugen vorhanden, welche radial zur Drehachse zustellbar sind. Vorteilhaft sind die dritten Werkzeuge von einer ersten Position (offen) in eine zweite Position (geschlossen) bewegbar. Als erste Position ist hier vorliegend die offene Position definiert, also jene Position, in der die dritten Werkzeuge maximal entfernt von der Drehachse im Werkzeughalter angeordnet sind. Als zweite Position (geschlossen) ist eine Position der dritten Werkzeuge definiert, in welcher die beiden dritten Werkzeuge, je nach Bearbeitungsschritt, das Kabel berühren, oder in die Ummantelung, die Schirmung, die Folie oder in den Leiter eindringen. Zwischen der ersten Position und der zweiten Position der dritten Werkzeuge gibt es unzählige dritte Positionen, in denen, je nach Verwendung, die dritten Werkzeuge, bevorzugt mithilfe der zweiten Antriebseinrichtung, positionierbar bzw. bewegbar sind. Für die Bewegung der dritten Werkzeuge mithilfe der zweiten Antriebseinrichtung kann eine Antriebskinematik zum Einsatz kommen wie beschrieben in DE 10 2020 207 962 A1. Eine derartige Kabelbearbeitungsvorrichtung hat dann zwar wieder die damit verbundenen Nachteile, ermöglicht nun aber sogar 3 verschiedene Bearbeitungsmöglichkeiten bei sehr kompakter Bauweise.

Dabei sind die ersten Werkzeuge bevorzugt als Einschneide-Messer ausgeführt, das zumindest eine zweite Werkzeug als Durchschneide-Messer und das dritte Werkzeug als stumpfes Pizzamesser zum Aufstellen eines Schirmgeflechts ausgeführt. Vorzugsweise gibt es mehrere zweite Werkzeuge, weiter bevorzugt auch mehrere dritte Werkzeuge. Weiter bevorzugt gibt es von allen drei Werkzeugen bzw. Werkzeuggruppen jeweils genau zwei und noch weiter bevorzugt liegen die Bearbeitungsflächen aller Werkzeuge in derselben Ebene bzw. zumindest nahe benachbart. Damit sind Kabelenden von komplexen Kabeltypen schnell und präzise bearbeitbar, wobei die Schnittqualität zumindest beim Einschneiden verbessert ist. Das Bearbeiten des Kabelendes mit den ersten und mit den dritten Werkzeugen erfolgt bei einer rotativen Bewegung des Werkzeughalters, sodass die Schnitte ins Kabel präzise und symmetrisch ausführbar sind. Das Bearbeiten des Kabels mit dem zumindest einen zweiten Werkzeug erfolgt ohne Rotation des Werkzeughalters, sodass das Durchschneiden mit einer erhöhten Geschwindigkeit erfolgt.

Alternativ dazu können die dritten Werkzeuge auch für andere Bearbeitungsoptionen ausgestaltet sein, beispielsweise als Axialmesser für das Entfernen von Folienresten oder als Abzugswerkzeug (formschlüssig mit stumpfem Messer oder reibschlüssig mit Greifer) oder als geheiztes Werkzeug für die thermische Behandlung (Wegschmelzen) von Kabelschichten mit niedrigem Schmelzpunkt. Die Vorteile sind hierbei dieselben wie zuvor genannt.

Die hier vorliegend beschriebenen Antriebseinrichtungen und Sensoren sind zum Austausch von Steuerdaten bzw. Messdaten mit einer Steuerungseinrichtung elektrisch verbunden. Die Steuereinrichtung übermittelt Steuerbefehle an die Antriebseinrichtungen, sodass die ersten Werkzeuge unabhängig von den zweiten Werkzeugen, und insbesondere unabhängig von den dritten Werkzeugen, überführbar sind sowie der Werkzeughalter unabhängig von den Werkzeugen drehbar ist. Damit sind komplexe und vielseitige Bearbeitungsschritte am Kabel präzise und schnell ausführbar.

Eine erfindungsgemässe Kabelbearbeitungsmaschine umfasst eine Kabelbearbeitungsvorrichtung, wie hier vorliegend beschrieben, sodass ein Kabel präzise und mit einer hohen Bearbeitungsgeschwindigkeit bearbeitbar ist.

Ein erfindungsgemässes Verfahren zum Konfektionieren eines Kabels mit einer Kabelbearbeitungsvorrichtung, insbesondere einer Kabelbearbeitungsvorrichtung, wie zuvor beschrieben, wobei das Verfahren zumindest die folgenden Schritte umfasst:
a) Bereitstellen eines Kabels;
b) Drehen eines Werkzeughalters mit einer ersten Antriebseinrichtung und rotatives Bearbeiten einer Ummantelung und/oder einer Schirmung und/oder einer Folie eines Kabels mit einer Gruppe aus zumindest zwei ersten Werkzeugen;
c) Anhalten des Werkzeughalters in einer vordefinierten Position;
d) Bearbeiten des Kabels mithilfe zumindest eines zweiten Werkzeugs, wobei das zumindest eine zweite Werkzeug unabhängig von den ersten Werkzeugen mithilfe einer weiteren Antriebseinrichtung bewegt wird.

Vorzugsweise befindet sich das zumindest eine zweite Werkzeug während des Schritts b) in einer ersten Position. Damit ist ein ungewolltes Beschädigen der Kabel während des Bearbeitens des Kabels mit den ersten Werkzeugen verhindert.

Insbesondere wird das zumindest eine zweite Werkzeug in der ersten Position passiv gefedert und damit reproduzierbar und stabil in der ersten Position gehalten.

Bevorzugterweise wird nach dem Schritt b) der Werkzeughalter relativ zum Kabel entlang der Drehachse bewegt, wobei sich die ersten Werkzeuge in einer dritten Position befinden. Als eine dritte Position ist hier vorliegen eine Position der ersten Werkzeuge definiert, in welcher die Ummantelung des Kabels mithilfe der beiden ersten Werkzeuge vom Leiter abgezogen wird.

Weitere Vorteile, Merkmale und Einzelheiten der Erfindung ergeben sich aus der nachfolgenden Beschreibung, in der unter Bezugnahme auf die Zeichnungen, Ausführungsbeispiele der Erfindung beschrieben sind. Aufzählungen wie erste, zweite, dritte oder weitere dienen lediglich zur Identifikation der Bauteile.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1a: eine erste Ausführungsform einer erfindungsgemässen Kabelbearbeitungsvorrichtung in einer schematischen Schnittdarstellung, wobei erste Werkzeuge in einer ersten Position dargestellt sind,
- Fig. 1b: die Kabelbearbeitungsvorrichtung gemäss Fig. 1a in einer schematischen Schnittdarstellung, wobei zweite Werkzeuge in einer ersten Position dargestellt sind,
- Fig. 1c: die Kabelbearbeitungsvorrichtung gemäss Fig. 1b in einer schematischen Schnittdarstellung, wobei die zweiten Werkzeuge in einer weiteren Position dargestellt sind,
- Fig. 2a: die Kabelbearbeitungsvorrichtung gemäss Fig. 1b in einer schematischen Schnittdarstellung gemäss der Schnittlinie A-A und in derselben Position wie in Fig. 1b dargestellt,
- Fig. 2b: die Kabelbearbeitungsvorrichtung gemäss Fig. 2a, mit den ersten Werkzeugen in einer zweiten Position dargestellt,
- Fig. 3a: eine weitere Ausführungsform einer erfindungsgemässen Kabelbearbeitungsvorrichtung in einer schematischen Schnittdarstellung, wobei erste Werkzeuge in einer ersten Position dargestellt sind,
- Fig. 3b: die Kabelbearbeitungsvorrichtung gemäss Fig. 3a in einer schematischen Schnittdarstellung, wobei zweite Werkzeuge in einer ersten Position dargestellt sind,
- Fig. 3c: die Kabelbearbeitungsvorrichtung gemäss Fig. 3b in einer schematischen Schnittdarstellung, wobei die zweiten Werkzeuge in einer weiteren Position dargestellt sind, und
- Fig. 4: eine weitere Ausführungsform einer erfindungsgemässen Kabelbearbeitungsvorrichtung in einer schematischen Schnittdarstellung, wobei erste Werkzeuge in einer ersten Position dargestellt sind.

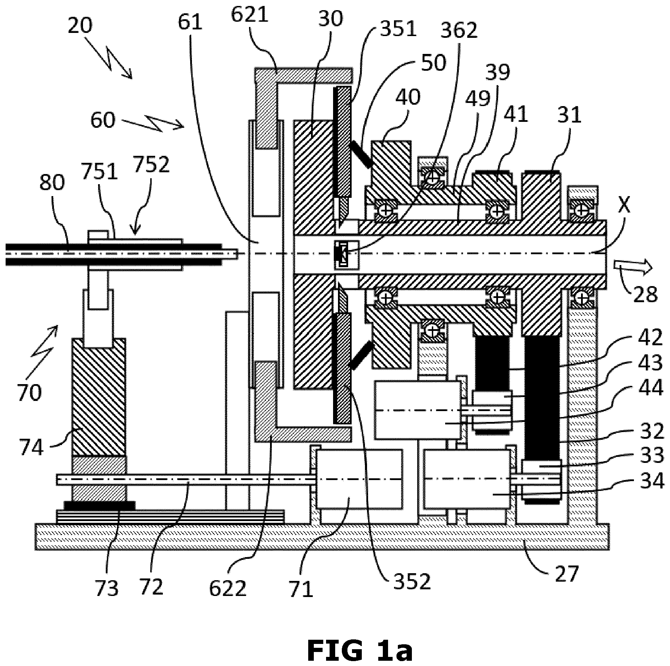

**Fig. 1a bis Fig. 1c** zeigen eine erste Ausführungsform einer Kabelbearbeitungsmaschine mit einer Kabelbearbeitungsvorrichtung 20 mit einer Verbindungsstruktur 27 und einem darin drehbar um die Drehachse X gelagerten Werkzeughalter 30, in welchem eine erste Gruppe von ersten Werkzeugen 351, 352 und eine zweite Gruppe von zweiten Werkzeugen 361, 362 linear und senkrecht zur Drehachse verschiebbar gelagert sind, sowie mit einem Axialantrieb 70 zum axialen Verschieben des Kabels 80 entlang der Drehachse X. Die linearen Führungen im Werkzeughalter 30 bzw. die Werkzeuge 351, 352, 361, 362 sind symmetrisch um die Drehachse X angeordnet.

Der Axialantrieb 70 besteht aus einer axialen Antriebseinrichtung 71, einer Spindel 71, einem linearen Führungselement 73, einem Kabelgreifer 74 und zwei daran befestigten Greiferbacken 751, 752. Das Kabel 80 wird hierbei in den Greiferbacken 751, 752 des Kabelgreifers 74 fixiert, welcher als pneumatisch angetriebener Parallelgreifer ausgeführt ist. Der Kabelgreifer 74 ist verbunden mit dem linearen Führungselement 73, welches auf einer an der Verbindungsstruktur 27 befestigten Führungsschiene geführt ist und somit eine axiale Bewegung parallel zur Drehachse X ermöglicht. Diese Bewegung wird angetrieben durch eine Spindelmutter im Bereich des Führungselements 73 und der Spindel 72, welche mithilfe der axialen Antriebseinrichtung 71 gedreht wird. Diese axiale Antriebseinrichtung 71 ist ausgeführt als elektrisch angetriebener Motor mit einem Drehgeber und angeflanschtem Planetengetriebe, und ist elektrisch verbunden mit einer Steuerungseinrichtung (nicht dargestellt), ebenso wie alle anderen hier angeführten Motoren, Sensoren und Ventile für pneumatische Antriebe.

Alternativ zum Antrieb mit einer Spindel 72 kann auch ein Zahnstangen- oder Zahnriemenantrieb zur Bewegung des Kabelgreifers 74 verwendet werden. Der Kabelgreifer 74 kann auch als Winkelgreifer ausgebildet sein. Ergänzend können auch noch weitere Antriebe und/oder Führungen für Bewegungen des Kabels 80 quer zur Drehachse X vorgesehen sein. Alternativ zur axialen Bewegung des Kabelgreifers können auch dessen Greiferbacken Rollen oder ähnliche Antriebselemente umfassen und somit das Kabel direkt fördern. Diese Bauform ist vorteilhaft bei Schwenkarmmaschinen. Alternativ ist es auch möglich, den Werkzeughalter zusammen mit seiner drehbaren Lagerung und allen seinen Antrieben axial zu verschieben. Diese Bauform ist vorteilhaft bei einfachen Transfer- oder Rundtakt-Maschinen, bei denen das Kabel in einem nicht axial verschiebbaren Kabelträger zwischen verschiedenen Kabelbearbeitungsvorrichtungen bewegt wird.

Der Werkzeughalter 30 ist drehbar an der Verbindungsstruktur 27 gelagert und über eine innere Hohlwelle 39 verbunden mit einem ersten Antriebsrad 31, ausgeführt als Zahnriemenrad 31. Dieses erste Zahnriemenrad 31 ist über einen ersten Zahnriemen 32 und ein erstes Zahnriemenritzel 33 mit einer ersten Antriebseinrichtung 34 verbunden, wiederum ausgeführt als elektrisch angetriebener Motor mit Drehgeber und angeflanschtem Planetengetriebe, und elektrisch verbunden mit einer Steuerungseinrichtung (nicht dargestellt). Somit kann der Werkzeughalter 30 aktiv motorisch mithilfe von Steuerungssignalen gedreht werden.

Im Werkzeughalter 30 ist eine erste Gruppe von ersten Werkzeugen 351, 352 und eine zweite Gruppe von zweiten Werkzeugen 361, 362 linear verschiebbar gelagert, in radialer Richtung zur bzw. von der Drehachse X. Die erste Gruppe von ersten Werkzeugen 351, 352 wird hierbei mithilfe eines ersten Antriebs 50 bewegt und die zweite Gruppe von zweiten Werkzeugen 361, 362 mithilfe eines zweiten Antriebs 60.

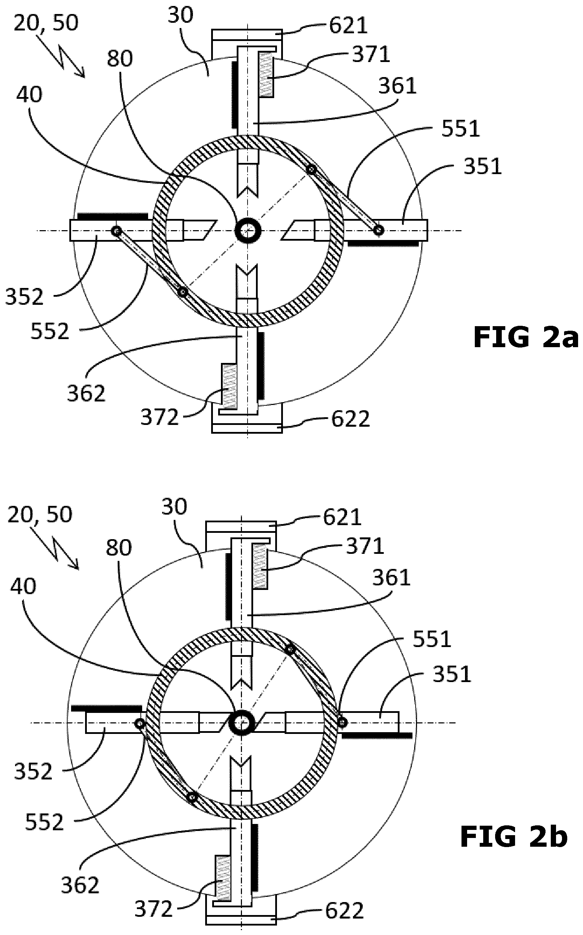

Der erste Antrieb 50 erzeugt aus einer relativen Drehung zwischen dem Werkzeughalter 30 und einem Stellring 40 eine erforderliche radiale Linearbewegung der ersten Werkzeuge 351, 352. Dieser erste Antrieb 50 ist in Fig. 1a schematisch mit zwei dicken Linien dargestellt, eine beispielhafte Ausführung ist in Fig. 2 gezeigt.

Der Stellring 40 ist über eine äussere Hohlwelle 49 mit dem zweiten Antriebsrad 41 verbunden, ausgeführt als Zahnriemenrad 41. Die äussere Hohlwelle 49 und die innere Hohlwelle 39 sind zueinander und zur Verbindungsstruktur 27 drehbar gelagert. Das zweite Zahnriemenrad 41 ist über einen zweiten Zahnriemen 42 und ein zweites Zahnriemenritzel 43 mit einer zweiten Antriebseinrichtung 44 verbunden, wiederum ausgeführt als elektrisch angetriebener Motor mit Drehgeber und angeflanschtem Planetengetriebe, und elektrisch verbunden mit einer Steuerungseinrichtung (nicht dargestellt). Somit kann auch der Stellring 40 aktiv motorisch mithilfe von Steuerungssignalen gedreht werden.

Die beiden Antriebseinrichtungen 34, 44 für den Werkzeughalter 30 und den Stellring 40 werden hierbei so angesteuert, dass sie im Normalbetrieb synchron drehen und zum Zustellen der ersten Gruppe von ersten Werkzeugen 351, 352 eine Relativbewegung zueinander ausführen.

Der zweite Antrieb 60 besteht aus einer Antriebseinrichtung 61 und zwei von ihr bewegten Betätigerstössel 621, 622, welche die zweiten Werkzeuge 361, 362 betätigen. Die Antriebseinrichtung 61 ist ausgeführt als pneumatisch angetriebener Parallelgreifer und verbunden mit der Verbindungsstruktur 27, rotiert also nicht zusammen mit dem Werkzeughalter 30. Die Betätigerstössel 621, 622 sind integriert in bzw. befestigt an den Greiferbacken dieses Parallelgreifers 61.

Die zweiten Werkzeuge 361, 362 sind in radialer Richtung linear geführt im Werkzeughalter 30, und jeweils verbunden mit einem passiven Kraftelement 371, 372, hier ausgeführt als Feder bzw. als zylindrische Spiraldruckfeder. Dieses passive Kraftelement 371, 372 sorgt dafür, dass das dazugehörende zweite Werkzeug 361, 362 im nicht betätigten Zustand in einer ersten Position eindeutig fixiert ist, aber dennoch mithilfe des Betätigungsstössels 621, 622 in zumindest eine weitere Position bringbar ist.

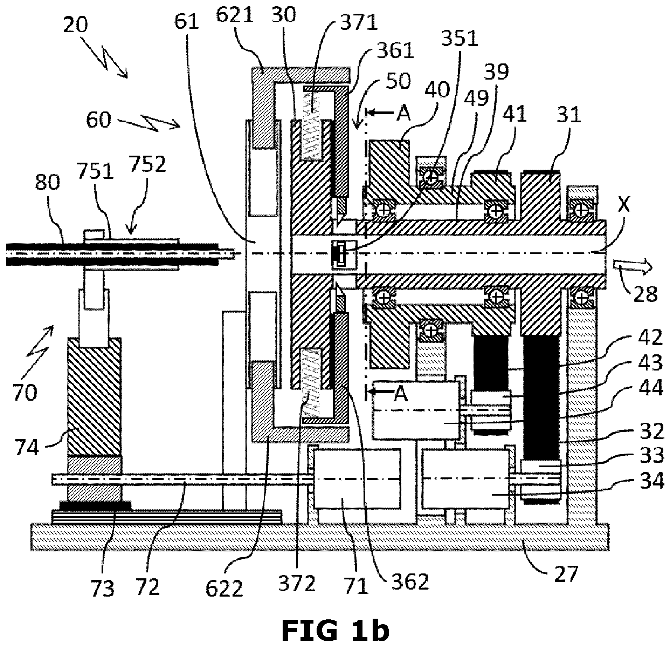

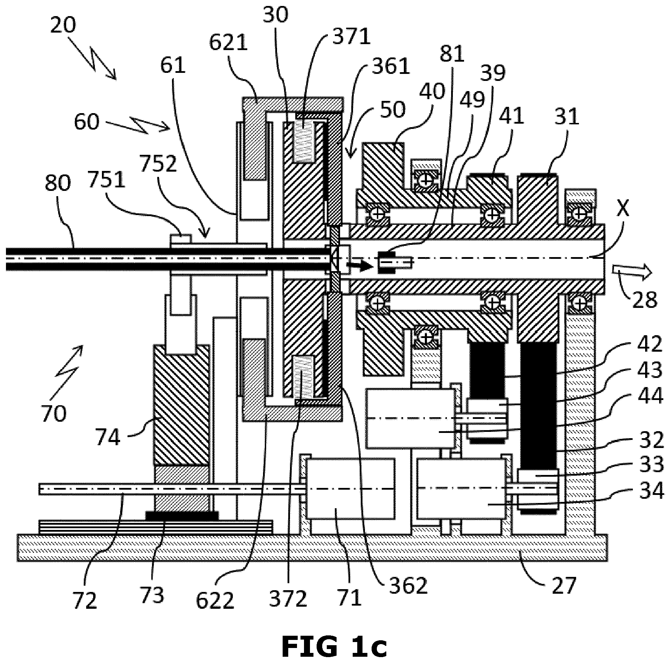

Dies wird in den Figuren Fig. 1b und Fig. 1c gezeigt:
In Fig. 1b befinden sich die beiden zweiten Werkzeuge 361, 362 in ihrer ersten Position (offen - maximal beabstandet voneinander). Auch die zweite Antriebseinrichtung 61 mit ihren beiden Betätigerstössel 621, 622 befindet sich in ihrer ersten Position (offen - maximal beabstandet voneinander bzw. nicht betätigt). In dieser Position ist die Drehung des Werkzeughalters 30 möglich und die zweiten Werkzeuge 361, 362 bleiben immer in ihrer ersten Position (offen - maximal beabstandet voneinander), wohingegen eine Bearbeitung des Kabels 80 mit den ersten Werkzeugen 351, 352 weiterhin möglich ist. Um die zweiten Werkzeuge 361, 362 in ihre weitere Position zur Bearbeitung des Kabels 80 zu bewegen, wird die Rotation des Werkzeughalters 30 in einer vordefinierten Position gestoppt, in einer Winkellage um die Drehachse X, bei welcher die zweiten Werkzeuge 361, 362 und die Betätigerstössel 621, 622 zueinander ausgerichtet sind (Fig. 1b, Fig. 1c, Fig. 2a, Fig. 2b).

In dieser Winkellage wird die Antriebseinrichtung 61 nun in ihre weitere Position überführt, wodurch die beiden Betätigerstössel 621, 622 bewegt werden, mit den beiden zweiten Werkzeuge 361, 362 in Wirkverbindung treten und diese radial nach innen bewegen, wodurch das Kabel 80 bearbeitet bzw. geschnitten wird.

Im gezeichneten Beispiel der Kabelbearbeitungsvorrichtung 20 sind die zweiten Werkzeuge 361, 362 als Durchschneidemesser ausgeführt, wodurch das Kabel 80 durchgeschnitten wird und ein Kabelstück 81 davon abgetrennt wird. Die ersten Werkzeuge 351, 352 sind als Einschneidemesser ausgeführt, welche das Kabel in seinen äusseren Schichten einschneiden und diese Schichten teilweise entfernen, beispielsweise eine Ummantelung, eine Folie oder eine Schirmung. Um dieses abgetrennte Material zu entfernen, dient eine Absaugeinrichtung 28, hier nur schematisch eingezeichnet als Blockpfeil.

Alternativ oder ergänzend kann die Antriebseinrichtung 61 auch als elektrischer Parallelgreifer ausgeführt sein, oder die Betätigerstössel 621, 622 mit eigenständigen Antriebseinrichtungen bewegt werden, bevorzugt ausgeführt als einfache Pneumatikzylinder und angesteuert von einem gemeinsamen Ventil. Diese ermöglicht eine platzsparende Bauweise und/oder mehr als zwei Betätigerstössel und damit mehr als zwei zweite Werkzeuge. Auch hier ist ein elektrischer Antrieb möglich, bevorzugt mithilfe von Elektromagneten, vorzugsweise in Tauchanker-Bauweise. Bei den passiven Kraftelementen 371, 372 können auch andere Federtypen verwendet werden, beispielsweise Zugfedern oder Roll- bzw. Konstantkraftfedern. Auch die Verwendung von Permanentmagneten ist möglich. Statt einer linearen Lagerung der Werkzeuge im Werkzeughalter ist auch eine drehbare Lagerung möglich, oder auch eine Mischform (eine Gruppe von Werkzeugen linear gelagert, die andere Gruppe drehbar gelagert).

**Fig. 2a und Fig 2b** zeigen eine schematische Schnittdarstellung des ersten Antriebs 50 in der Kabelbearbeitungsvorrichtung 20 aus Fig. 1, gemäss der in Fig. 1b eingezeichneten Schnittebene A-A.

In Fig. 2a sind hierbei beide Gruppen von Werkzeugen 351, 352, 361, 362 in ihrer jeweils ersten Position (offen - maximal beabstandet voneinander), also wie auch gezeigt in Fig. 1b. In Fig. 2b ist die erste Gruppe von ersten Werkzeugen 351, 352 in Richtung des Kabels 80 radial zugestellt, durch Drehung des Stellrings 40 relativ zum Werkzeughalter 30 und befindet sich somit in der zweiten (geschlossenen/zugestellten) Position. Zur Umwandlung der relativen Drehung in die gewünschte lineare Radialbewegung dienen die beiden Antriebselemente 551, 552, hier ausgeführt als Pleuelstangen. Diese Pleuelstangen 551, 552 sind jeweils am Stellring 40 und am jeweiligen ersten Werkzeug 351, 352 drehbar gelagert und übertragen somit die Bewegung des Stellrings 40 auf die Werkzeuge 351, 352.

Alternativ oder ergänzend können auch Antriebselemente für diese Kraftübertragung verwendet werden, beispielsweise Zahnräder oder Ritzel, Nockenrollen oder Gleitlager, oder Riemen, Seile oder Ketten, sofern die alternativen Stellringe, Werkzeuge und/oder Werkzeughalter entsprechend ausgeführt sind, beispielsweise als Zahnrad und Zahnstange, Kulissen- bzw. Nockenscheiben-Ring, oder mit Umlenkrollen und/oder zusätzlichen Federn auf dem Werkzeughalter. Auch eine drehbare Lagerung der Werkzeuge im Werkzeughalter ist denkbar.

Die erste Gruppe von ersten Werkzeugen 351, 352 ist ausgeführt als Einschneide-Messer mit einer leicht schrägen Schneide, was unerwünschte Vibrationen des Messers beim Schneiden des Kabels 80 minimiert und so für eine optimale Präzision und Schnittqualität sorgt. Die zweite Gruppe von Werkzeugen 361, 362 ist ausgeführt als Durchschneidemesser mit V-förmigen Klingen, welche ein Durchschneiden des Kabels 80 mit weitgehend planarer Schnittfläche ermöglichen, auch ohne Rotation der Werkzeuge 361, 362 um die Drehachse X.

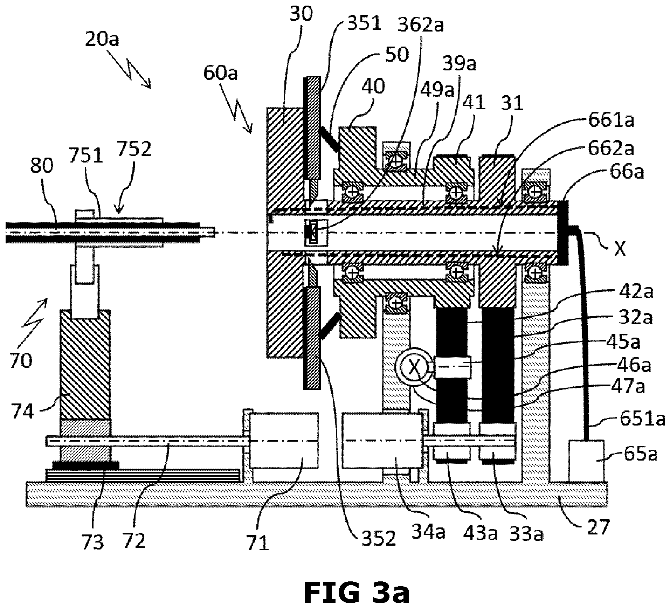

**Fig. 3a bis Fig 3c** zeigen eine weitere Ausführungsform einer Kabelbearbeitungsmaschine mit einer Kabelbearbeitungsvorrichtung 20a, ähnlich wie die Kabelbearbeitungsvorrichtung 20 aus Fig. 1, mit einem alternativen zweiten Antrieb 60a für die Bewegung der zweiten Gruppe von zweiten Werkzeugen 361a, 361b und einer alternativen Antriebskinematik für die Drehung von Werkzeughalter 30 und Stellring 40.

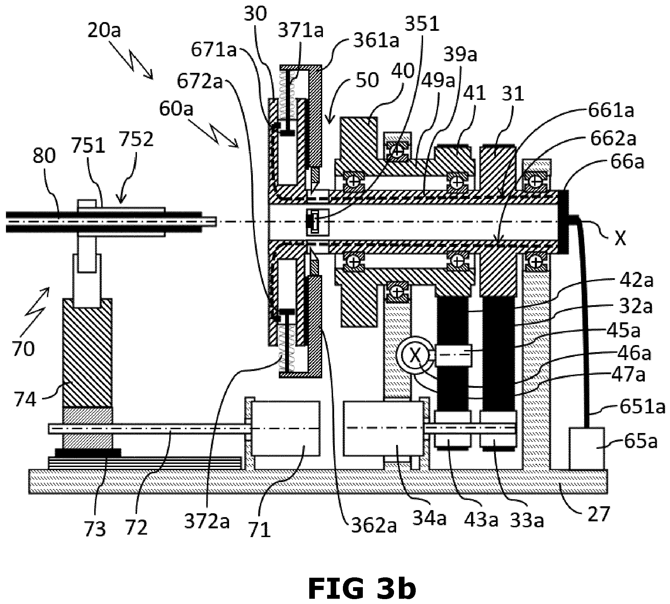

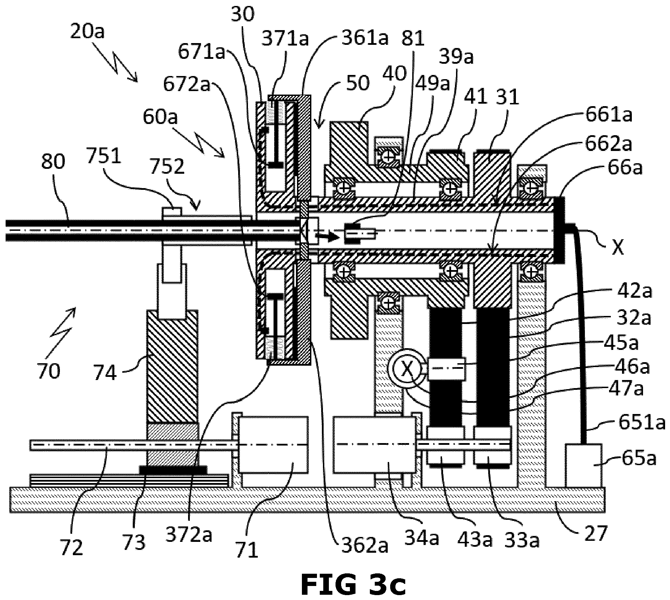

Der alternative Antrieb 60a (sichtbar in Fig. 3b und Fig. 3c) besteht aus den beiden Antriebseinrichtungen 671a, 672a, den (Druckluft)Schläuchen 651a, 661a, 662a, der Drehdurchführung 66a und dem Ventil 65a. Das Ventil 65a ist Teil einer Ventilbatterie und elektrisch verbunden mit einer Steuerungseinrichtung (nicht dargestellt). Mithilfe von Steuerungssignalen kann der daran angeschlossene Druckluftschlauch 651a entweder mit Druckluft beaufschlagt oder drucklos geschaltet werden. Das andere Ende dieses Druckluftschlauchs 651a ist verbunden mit dem nicht mitdrehenden Teil der Drehdurchführung 66a. Der mitdrehende Teil der Drehdurchführung 66a ist verbunden mit der inneren Hohlwelle 39, welche den Werkzeughalter 30 mit dem ersten Antriebsrad 31 verbindet. Dort wird die Druckluft mithilfe der Druckluftschläuche 661a, 662a weitergeleitet zu den beiden Antriebseinrichtungen 671a, 672a, ausgeführt als einfachwirkende Pneumatikzylinder, welche im Werkzeughalter 30 angeordnet sind. Diese sind verbunden mit den zweiten Werkzeugen 361a, 362a und jeweils einem passiven Kraftelement 371a, 372a, ausgeführt als Feder bzw. als zylindrische Spiraldruckfeder. Durch die passiven Kraftelemente 371a, 372a werden die zweiten Werkzeuge 361a, 362a in ihre erste Position (offen) bewegt, wenn die Antriebseinrichtungen 671a, 672a auf drucklos geschaltet sind (Fig. 3b). Werden die beiden Antriebseinrichtungen 671a, 672a mit Druck beaufschlagt (Fig. 3c), bewegen sie die zweiten Werkzeuge 361a, 362a in die zur Bearbeitung bzw. zum Durchschneiden des Kabels 80 notwendige weitere Position. Durch die Verwendung von einfachwirkenden Pneumatikzylinder in Kombination mit passiven Kraftelementen wird nur ein einziger Druckluftkanal in der Drehdurchführung 66a benötigt, was eine besonders kostengünstige und kompakte Ausführung ermöglicht.

Alternativ oder ergänzend kann die Drehdurchführung auch als Hohlwellendrehdurchführung ausgeführt sein, was wiederum die Möglichkeit schafft für eine Absaugeinrichtung ähnlich wie eingezeichnet in Fig. 1. Auch die Verwendung einer Drehdurchführung mit mehreren Druckluftkanälen ist möglich, was dann wiederum doppeltwirkende Pneumatikzylinder bei den Antriebselementen ermöglicht. Auch Drehdurchführungen mit Schleifringen für elektrische Signale oder Energieübertragung sind denkbar, bevorzugt in Kombination mit Sensoren zur Detektion der Endlagen der Antriebselemente und/oder Heizelementen zum Heizen der Werkzeuge für thermische Behandlungen am Kabel 80, speziell einer dort enthaltenen Schirmfolie.

Bei der Ausführung der passiven Kraftelemente sind wiederum alle Varianten möglich wie bereits beschrieben in Fig. 1. Auch eine drehbare Lagerung der zweiten Werkzeuge ist möglich.

Alternativ zur Verwendung von zwei getrennten Antriebselementen können auch drei oder mehrere Antriebselemente verwendet werden, oder aber auch nur ein einziges Antriebselement in Kombination mit einer Antriebskinematik, welche die synchrone Zustellbewegung aller zweiten Werkzeuge ermöglicht.

Auch bei den Bauformen mit den Antriebselementen angeordnet im Werkzeughalter können die Antriebselemente elektrisch ausgeführt sein, vorzugsweise als Elektromagnete, bevorzugt als Tauchankermagnete. Hierbei ist die Drehdurchführung als Schleifring ausgeführt.

Auch die Antriebskinematik für die Drehung von Werkzeughalter 30 und Stellring 40 ist anders ausgeführt als bei der Kabelbearbeitungsvorrichtung 20 in Fig. 1. Beide sind über jeweils eine Hohlwelle 39a, 49a verbunden mit jeweils einem Zahnriemenrad 31, 41. In der weiteren Kabelbearbeitungsvorrichtung 20a sind allerdings beide Zahnriemenräder 31, 41 über jeweils einen Zahnriemen 32a, 42a und ein Zahnriemenritzel 33a, 43a verbunden mit der Welle der ersten Antriebseinrichtung 34a, wiederum ausgeführt als elektrischer Motor mit Planetengetriebe und Drehgeber. Um eine relative Drehung der beiden Zahnriemenräder 31, 41 zueinander zu ermöglichen, ist der zweite Zahnriemen 42a umgelenkt mithilfe von zwei Umlenkrollen 45a (nur eine davon ist sichtbar), welche quer zur Blickrichtung motorisch bewegt werden können, mithilfe einer Spindel 46a und einer zweiten Antriebseinrichtung 47a.

Alternativ oder ergänzend können die Umlenkrollen auch am anderen Zahnriemen angeordnet sein, oder deren Linearbewegung anders angetrieben, beispielsweise über einen Zahnriemen oder eine Zahnstange. Auch alternative Antriebe zur Erzeugung einer relativen Drehung zwischen den beiden Antriebsrädern 31, 41 sind denkbar, beispielsweise mithilfe eines Differential- bzw. Planetengetriebes.

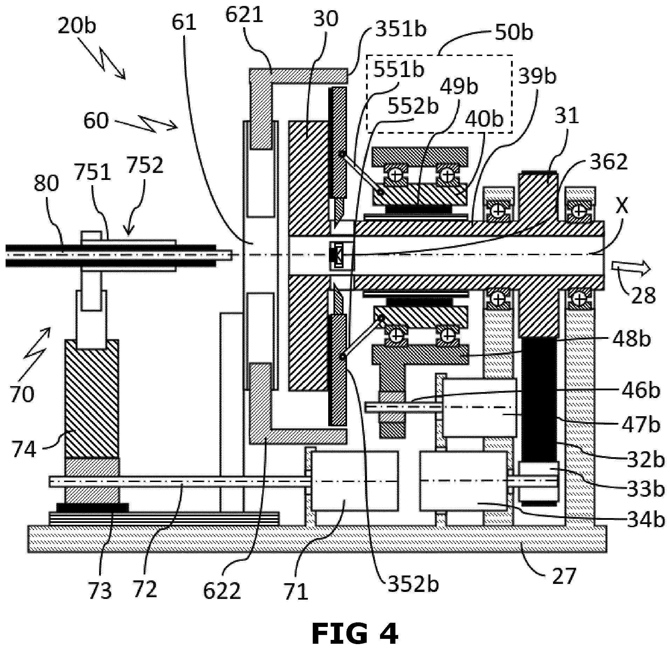

**Fig. 4** zeigt eine weitere Ausführungsform einer Kabelbearbeitungsvorrichtung 20b, ähnlich wie die Kabelbearbeitungsvorrichtung 20 aus Fig. 1, mit einem alternativen Antrieb 50b für die Zustellung der ersten Gruppe von Werkzeugen 351b, 352b.

Hierbei ist der Stellring 40b ausgeführt als axial bewegbares inneres Mitnehmerstück 40b und mithilfe eines linearen Führungselements 49b linear verschiebbar gelagert entlang der Drehachse X, auf der inneren Hohlwelle 39b zwischen dem Werkzeughalter 30 und dem ersten Antriebsrad 31. Diese axiale Bewegung wird mithilfe von zwei Antriebselementen 551b, 552b in eine radiale Bewegung der ersten Werkzeuge 351b, 352b umgewandelt. Diese Antriebselemente 551b, 552b sind wiederum ausgeführt als Pleuelstangen, welche im inneren Mitnehmerstück 40b und in den ersten Werkzeugen 351b, 352b drehbar gelagert sind. Die axiale Bewegung des inneren Mitnehmerstücks 40b wird mithilfe einer Antriebseinrichtung 47b erzeugt, welche mit der Verbindungsstruktur 27 verbunden ist und wiederum als Elektromotor mit Planetengetriebe und Drehgeber ausgeführt ist. Hierzu wird die Drehbewegung dieser Antriebseinrichtung 47b mithilfe einer Spindel 46b in eine lineare Bewegung umgewandelt, welche ein daran befestigtes, nicht drehendes, äusseres Mitnehmerstück 48b entlang der Drehachse X bewegt. In diesem äusseren Mitnehmerstück 48b ist das innere Mitnehmerstück 40b drehbar gelagert. Somit wird die Drehung des Werkzeughalters 30 nicht behindert, aber die axial wirkende Antriebskraft der Antriebseinrichtung 47b bzw. der daran befestigten Spindel 46b kann auf das innere Mitnehmerstück 40b und die daran befestigten Antriebselemente 551b, 552b übertragen werden.

Alternativ können die Antriebselemente und die dazu passenden mechanischen Schnittstellen am inneren Mitnehmerstück und an den ersten Werkzeugen auch ausgeführt sein als Kulissenführung, Kombination aus Zahnstangen und Ritzeln, mit Seil, Riemen oder Ketten, oder anderen Getriebearten.

Auch möglich ist die Umwandlung der Axialbewegung in eine Drehung eines Stellrings relativ zum Werkzeughalter und dann die Verwendung eines Antriebs ähnlich wie beschrieben bei Fig. 2. Die Umwandlung der Axialbewegung in eine Drehbewegung erfolgt beispielsweise mithilfe einer Spindel.

Auch weitere Kombinationen der verschiedenen Antriebe für die einzelnen Werkzeuggruppen sind möglich, auch mit weiteren, hier vorliegend beschriebenen Teillösungen, beispielsweise mehr als zwei Werkzeuge pro Werkzeuggruppe und/oder drehbare Lagerung der Werkzeuge im Werkzeughalter.

Auch andere Ausführungsformen der Werkzeuge sind verwendbar, beispielsweise rotierende Scheiben (Pizzamesser) zum Aufstellen eines Schirmgeflechts, Messer mit speziellen Schnittflächen für axiale Schnitte zum Entfernen eines Folienrests, oder beheizte Werkzeuge für thermische Behandlungen zum Schwächen beispielsweise einer Schirmfolie.

Ein erfindungsgemässes Verfahren zum Konfektionieren eines Kabels 80 mit einer Kabelbearbeitungsvorrichtung, insbesondere einer Kabelbearbeitungsvorrichtung 20, wie zuvor beschrieben und beispielsweise in den Fig. 1a bis Fig. 1c dargestellt, umfasst zumindest die folgenden Schritte:
a) Bereitstellen eines Kabels 80;
b) Drehen eines Werkzeughalters 30 mit der ersten Antriebseinrichtung 34 und rotatives Bearbeiten einer Ummantelung und/oder einer Schirmung und/oder einer Folie eines Kabels 80 mit einer Gruppe aus zumindest zwei ersten Werkzeugen 351, 352;
c) Anhalten des Werkzeughalters 30 in einer vordefinierten Position;
d) Bearbeiten des Kabels 80 mithilfe zumindest eines weiteren Werkzeugs 361, 362, wobei das zumindest eine zweite Werkzeug 361, 362 unabhängig von den ersten Werkzeugen mithilfe einer weiteren Antriebseinrichtung bewegt wird.

Vorzugsweise befindet sich das zumindest eine zweite Werkzeug 361, 362 während des Schritts b) in einer ersten Position

Insbesondere wird das zumindest eine zweite Werkzeug 361, 362 in der ersten Position passiv gefedert.

Bevorzugterweise wird nach dem Schritt b) der Werkzeughalter relativ zum Kabel entlang der Drehachse bewegt, wobei sich die ersten Werkzeuge in einer dritten Position befinden.

### Bezugszeichenliste

- 20, 20a-b: Kabelbearbeitungsvorrichtung
- 27: Verbindungsstruktur
- 28: Absaugeinrichtung
- 30: Werkzeughalter (Werkzeugflansch)
- 31: (erstes) Antriebsrad (Zahnriemenrad für Werkzeughalter)
- 32, 32a-b: (erster) Zahnriemen
- 33, 33a-b: (erstes) Zahnriemenritzel
- 34, 34a-b: (erste) Antriebseinrichtung (Getriebemotor)
- 351, 352, 351b, 352b: (erstes) Werkzeug (erste Gruppe, Einschneide-Messer)
- 361, 362,: 361a, 362a (zweites) Werkzeug (zweite Gruppe, Durchschneide-Messer, V-Messer)
- 371, 372, 371a, 372a: passives Kraftelement (Feder)
- 39, 39a-b: (innere) Hohlwelle
- 40: Stellring
- 41: (zweites) Antriebsrad (Zahnriemenrad für Stellring)
- 42, 42a: (zweiter) Zahnriemen
- 43, 43a: (zweites) Zahnriemenritzel
- 44: (zweite) Antriebseinrichtung (Getriebemotor)
- 45a: Umlenkrolle
- 46a,b: Spindel
- 47a,b: (zweite) Antriebseinrichtung (Getriebemotor)
- 48b: (äusseres) Mitnehmerstück (nicht drehend)
- 49, 49a: (äussere) Hohlwelle
- 50, 50b: (erste) Antrieb (Getriebe)
- 40b: Stellring (axial bewegt, inneres Mitnehmerstück, mitdrehend)
- 49b: (lineares) Führungselement
- 551, 552, 551b, 552b: Antriebselement (Pleuelstange)
- 60, 60a: (zweite) Antrieb
- 61: Antriebseinrichtung (Betätigergreifer, Parallelgreifer)
- 621, 622: Betätigerstössel (Greiferbacke)
- 65a: Ventil (Ventilbatterie)
- 651a: (Druckluft-) Schlauch
- 66a: Drehdurchführung (pneumatisch)
- 661a, 662a: (Druckluft-) Schlauch
- 671a, 672a: Antriebseinrichtung (Pneumatikzylinder, einfachwirkend)
- 70: Axialantrieb
- 71: (axiale) Antriebseinrichtung (Getriebemotor)
- 72: Spindel
- 73: (lineares) Führungselement
- 74: Kabelgreifer (Parallelgreifer)
- 751, 752: Greiferbacke
- 80: Kabel
- 81: (abgetrenntes) Kabelstück
- A: Schnittebene
- X: Drehachse (Kabelachse)

## Patentansprüche

1. Kabelbearbeitungsvorrichtung (20, 20a, 20b) umfassend einen Werkzeughalter (30) zum Aufnehmen einer Gruppe aus zumindest zwei ersten Werkzeugen (351, 352) zur Bearbeitung eines Kabels (80),
wobei der Werkzeughalter (30) um eine Drehachse (X) drehbar gelagert ist und die zumindest zwei ersten Werkzeuge (351, 352) relativ zum Werkzeughalter (30) zum Zustellen der ersten Werkzeuge (351, 352) für die Kabelbearbeitung bewegbar sind,
und eine erste Antriebseinrichtung (34, 34a, 34b) zum rotativen Antreiben des Werkzeughalters (30) und eine zweite Antriebseinrichtung (44, 47a, 47b) zur Bewegung der ersten Werkzeuge (351, 352) relativ zum Werkzeughalter (30) vorgesehen sind,
und zumindest ein zweites Werkzeug (361, 362, 361a, 362a) im Werkzeughalter (30) angeordnet ist und relativ zu diesem bewegbar ist,
**dadurch gekennzeichnet, dass**
das zumindest eine zweite Werkzeug (361, 362, 361a, 362a) unabhängig von den ersten Werkzeugen (351, 352) mithilfe einer weiteren Antriebseinrichtung (61, 671a, 672b) bewegbar ist.

2. Kabelbearbeitungsvorrichtung nach Anspruch 1, **dadurch gekennzeichnet, dass**
zumindest eines der Werkzeuge (351, 352, 361, 362, 361a, 362a) als Messer zum Ein- und/oder Durchschneiden des Kabels (80) ausgeführt ist, und bevorzugt die ersten Werkzeuge (351, 352) als Einschneide-Messer zum Einschneiden in eine Ummantelung, eine Folie und/oder in eine Schirmung des Kabels (80) ausgeführt sind.

3. Kabelbearbeitungsvorrichtung nach Anspruch 1 oder 2, **dadurch gekennzeichnet, dass**
das zumindest eine zweite Werkzeug (361, 362, 361a, 362a) als Durchschneide-Messer zum Durchschneiden des Kabels (80) ausgeführt ist, wobei deren Schneiden bevorzugt V-förmig ausgestaltet sind.

4. Kabelbearbeitungsvorrichtung (20, 20a, 20b) nach einem der vorherigen Ansprüche, **dadurch gekennzeichnet, dass**
die Bearbeitungsflächen der ersten Werkzeuge (351, 352) und des zweiten Werkzeugs (361, 362, 361a, 362a) in derselben Ebene angeordnet sind.

5. Kabelbearbeitungsvorrichtung nach einem der vorherigen Ansprüche, **dadurch gekennzeichnet, dass**
ein weiteres zweites Werkzeug (361, 362, 361a, 362a) vorhanden ist, dessen Bearbeitungsfläche in derselben Ebene wie das zweite Werkzeug (361, 362, 361a, 362a) angeordnet ist.

6. Kabelbearbeitungsvorrichtung nach einem der vorherigen Ansprüche, **dadurch gekennzeichnet, dass**
im Werkzeughalter (30) zumindest ein passives Kraftelement (371, 372, 371a, 372a) vorhanden ist, um zumindest eines der zweiten Werkzeuge (361, 362, 361a, 362a) in eine erste Position zu überführen.

7. Kabelbearbeitungsvorrichtung nach einem der vorherigen Ansprüche, **dadurch gekennzeichnet, dass**
die weitere Antriebseinrichtung (61) zur Bewegung des zweiten Werkzeugs (361, 362) zumindest einen Betätigerstössel (621, 622) zur Betätigung von zumindest einer dazu ausgebildeten Kontaktfläche auf dem zweiten Werkzeug (361, 362) umfasst, wobei der Betätigerstössel (621, 622) insbesondere ortsfest angeordnet ist und/oder die weitere Antriebseinrichtung (61) als Parallelgreifer ausgebildet ist, bevorzugt als pneumatischer Parallelgreifer ausgebildet ist.

8. Kabelbearbeitungsvorrichtung nach einem der vorherigen Ansprüche, **dadurch gekennzeichnet, dass**
die weitere Antriebseinrichtung (671a, 672a) im Werkzeughalter (30) angeordnet ist, wobei bevorzugt eine Energieversorgung vorhanden ist, welche über Schläuche (651, 661a, 662a) mit der Antriebseinrichtung (671a, 672a) verbunden ist und bevorzugt eine Drehdurchführung (66a) für die Schläuche (651, 661a, 662a) vorhanden ist.

9. Kabelbearbeitungsvorrichtung nach Anspruch 8, **dadurch gekennzeichnet, dass**
die weitere Antriebseinrichtung (671a, 672a) im Werkzeughalter (30) pneumatisch ausgeführt ist, bevorzugt als einfachwirkender Pneumatikzylinder ausgeführt ist.

10. Kabelbearbeitungsvorrichtung einem der vorhergehenden Ansprüche, **dadurch gekennzeichnet, dass**
ein Stellring (40, 40b) vorhanden ist, welcher relativ zum Werkzeughalter (30, 30b) bewegbar ist, und bevorzugt zumindest ein Antriebselement (551, 552, 551b, 551b) vorhanden ist, welches am Stellring (40) angeordnet ist oder mit einer Fläche des Stellrings (40) in Wirkverbindung steht.

11. Kabelbearbeitungsvorrichtung nach einem der vorhergehenden Ansprüche, **dadurch gekennzeichnet, dass**
das Kabel (80) relativ zum Werkzeughalter (30) entlang der Drehachse (X) bewegbar ist.

12. Kabelbearbeitungsvorrichtung nach einem der vorhergehenden Ansprüche, **dadurch gekennzeichnet, dass**
eine Gruppe von dritten Werkzeugen vorhanden ist, welche radial zur Drehachse (X) zustellbar sind und bevorzugt mithilfe der zweiten Antriebseinrichtung (44, 47a, 47b) bewegbar sind.

13. Verfahren zum Konfektionieren eines Kabels (80) mit einer Kabelbearbeitungsvorrichtung, insbesondere einer Kabelbearbeitungsvorrichtung (20, 20a, 20b) nach einem den vorhergehenden Ansprüchen, umfassend zumindest die folgenden Schritte:
a) Bereitstellen eines Kabels (80);
b) Drehen eines Werkzeughalters (30) mit einer ersten Antriebseinrichtung (34, 34a, 34b) und rotatives Bearbeiten einer Ummantelung und/oder einer Schirmung und/oder einer Folie eines Kabels (80) mit einer Gruppe aus zumindest zwei ersten Werkzeugen (351, 352);
c) Anhalten des Werkzeughalters (30) in einer vordefinierten Position;
d) Bearbeiten des Kabels (80) mithilfe zumindest eines zweiten Werkzeugs (361, 362, 361a, 362a), wobei das zumindest eine zweite Werkzeug (361, 362, 361a, 362a) unabhängig von den ersten Werkzeugen (351, 352) mithilfe einer weiteren Antriebseinrichtung (61, 671a, 672b) bewegt wird.

14. Verfahren nach Anspruch 11 oder 12, **dadurch gekennzeichnet, dass** sich das zumindest eine zweite Werkzeug (361, 362, 361a, 362a) während des Schritts b) in einer ersten Position befindet, und insbesondere in der ersten Position passiv gefedert wird.

15. Verfahren nach einem der vorhergehenden Ansprüche, **dadurch gekennzeichnet, dass** nach dem Schritt b) der Werkzeughalter (30) relativ zum Kabel (80) entlang der Drehachse (X) bewegt wird, wobei sich die ersten Werkzeuge (351, 352) in einer dritten Position befinden.
